# EUROPEAN PATENT SPECIFICATION

(11) **EP 4 271 117 B1**
(45) Date of publication and mention of the grant of the patent: **28.01.2026**
(21) Application number: 21918351.4
(22) Date of filing: 14.01.2021
(51) Int. Cl.: H04W 76/28, H04W 92/18

(54) **DISCONTINUOUS RECEPTION-BASED SENSING**
DISKONTINUIERLICHE EMPFANGSBASIERTE ERFASSUNG
DÉTECTION DISCONTINUE BASÉE SUR LA RÉCEPTION

(43) Date of publication of application: 01.11.2023
(73) Proprietor: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN)
(74) Representative: Santarelli
(86) International application number: PCT/CN2021/071717
(87) International publication number: WO 2022/151141

(56) References cited:
- WO-A1-2016/160253
- WO-A1-2016/160271
- WO-A1-2020/164118
- WO-A1-2020/167072
- WO-A1-2020/187097
- WO-A2-2010/033957
- CN-A- 102 957 521
- CN-A- 110 913 482
- CN-A- 111 556 590
- US-A1- 2022 418 036
- "3rd Generation Partnership Project; Technical Specification Group Radio Access Network; NR; Medium Access Control (MAC) protocol specification (Release 16)", vol. RAN WG2, no. V16.3.0, 6 January 2021 (2021-01-06), pages 1 - 156, XP051999701, Retrieved from the Internet <URL:https://ftp.3gpp.org/Specs/archive/38_series/38.321/38321-g30.zip 38321-g30.docx> [retrieved on 20210106]
- ZTE CORPORATION ET AL: "Potential impact of DRX enhancement to RAN1 discussion", vol. RAN WG1, no. e-Meeting; 20201026 - 20201113, 1 November 2020 (2020-11-01), XP052350813, Retrieved from the Internet <URL:https://ftp.3gpp.org/tsg_ran/WG1_RL1/TSGR1_103-e/Docs/R1-2008880.zip R1-2008880 Potential impact of DRX to RAN1 discussion.docx> [retrieved on 20201101]
- "3rd Generation Partnership Project; Technical Specification Group Radio Access Network; Evolved Universal Terrestrial Radio Access (E-UTRA); Radio Resource Control (RRC); Protocol specification (Release 16)", vol. RAN WG2, no. V16.3.0, 6 January 2021 (2021-01-06), pages 1 - 1084, XP051999537, Retrieved from the Internet <URL:https://ftp.3gpp.org/Specs/archive/36_series/36.331/36331-g30.zip 36331-g30.docx> [retrieved on 20210106]
- "3rd Generation Partnership Project; Technical Specification Group Services and System Aspects; Study on Machine-Type Communications (MTC) and other mobile data applications communications enhancements (Release 12)", 23 December 2013 (2013-12-23), XP050764436, Retrieved from the Internet <URL:http://www.3gpp.org/ftp/tsg_sa/WG2_Arch/Latest_SA2_Specs/Rel-12/> [retrieved on 20131223]
- HUAWEI, HISILICON: "Physical layer impacts of sidelink DRX", 3GPP DRAFT; R1-2008332, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-meeting; 20201026 - 20201113, 24 October 2020 (2020-10-24), Mobile Competence Centre ; 650, route des Lucioles ; F-06921 Sophia-Antipolis Cedex ; France , XP051946632

## Description

### TECHNICAL FIELD

The disclosure relates to the field of communications, and more particularly, to a Discontinuous Reception (DRX)-based sensing method and a terminal.

### BACKGROUND

Sensing may include full sensing or partial sensing. The full sensing may include: a terminal may sense over all time slots (or subframes) except for a time slot in which data is sent. The partial sensing may include: the terminal only needs to sense over part of the time slots (or subframes). How to achieve energy saving and ensure transmission reliability in sensing is a problem that needs to be considered.

3GPP TS 38.321, V16.3.0, 6 January 2021, pages 1-156, ZTE CORPORATION ET AL: "Potential impact of DRX enhancement to RAN1 discussion", 3GPP DRAFT; R1-2008880, 1 November 2020, WO 2016/160271 A1 (QUALCOMM INC [US]) 6 October 2016 and WO 2010/033957 A2 (INTERDIGITAL PATENT HOLDINGS [US]; WANG PETER S [US] ET AL.) 25 March 2010 form part of the related prior art.

### SUMMARY

Embodiments of the disclosure provide a DRX-based sensing, which may achieve energy saving and ensure transmission reliability The invention is carried out according to the appended independent claims. Optional features of the invention are carried out according to the dependent claims.
,

The embodiments of the disclosure provide a chip, configured to implement the DRX-based sensing method.

Specifically, the chip may include a processor, configured to call and run a computer program from a memory to cause a device installed with the chip to cause the DRX-based sensing method.

The embodiments of the disclosure provide a computer-readable storage medium, configured to store a computer program. The computer program, when executed by a device, causes the device to cause the DRX-based sensing method.

The embodiments of the disclosure provide a computer program product, which may include a computer program instruction. The computer program instruction causes a computer to cause the DRX-based sensing method.

The embodiments of the disclosure provide a computer program, which runs on a computer to cause the computer to cause the DRX-based sensing method.

In the embodiments of the disclosure, the time range for performing sensing based on DRX is determined based on first information, so that energy saving can be achieved and transmission reliability can be ensured.

### BRIEF DESCRIPTION OF THE DRAWINGS

FIG. 1 is a schematic diagram of an application scenario according to an embodiment of the disclosure.
FIG. 2a is a schematic diagram of Sidelink (SL) communication within network coverage.
FIG. 2b is a schematic diagram of SL communication within partial network coverage.
FIG. 2c is a schematic diagram of SL communication outside network coverage.
FIG. 3a is a schematic diagram of unicast transmission.
FIG. 3b is a schematic diagram of multicast transmission.
FIG. 3c is a schematic diagram of broadcast transmission.
FIG. 4 is a schematic diagram of a sensing window and a selection window.
FIG. 5 is a schematic diagram of a DRX cycle.
FIG. 6 is a schematic diagram of a combination of DRX and partial sensing.
FIG. 7 is a schematic diagram of sensing during a DRX active duration.
FIG. 8 is a schematic diagram of sensing during a DRX dormant duration.
FIG. 9 is a schematic flowchart of a DRX-based sensing method according to a part of the invention.
FIG. 10 is a schematic block diagram of a first terminal according to a part of the invention.
FIG. 11 is a schematic block diagram of a communication device according to an embodiment of the disclosure.
FIG. 12 is a schematic block diagram of a chip according to an embodiment of the disclosure.
FIG. 13 is a schematic block diagram of a communication system according to an embodiment of the disclosure.

### DETAILED DESCRIPTION

The technical solutions in the embodiments of the disclosure will be described below in combination with the drawings in the embodiments of the disclosure.

The technical solution in embodiments of the disclosure can be applied to various communication systems, such as Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, Advanced Long Term Evolution (LTE-A) system, New Radio (NR) system, evolution system of the NR system, LTE-based access to unlicensed spectrum (LTE-U) system, NR-based access to unlicensed spectrum (NR-U) system, Non-Terrestrial Networks (NTN) system, Universal Mobile Telecommunications System (UMTS), Wireless Local Area Network (WLAN), Wireless Fidelity (WiFi), 5th Generation (5G) system or other communication systems.

In general, traditional communication systems support a limited number of connections and are easy to implement. However, with the development of the communication technology, mobile communication systems will not only support traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc. Embodiments of the disclosure can also be applied to these communication systems.

Optionally, the communication system in embodiments of the disclosure can be applied to a scenario of Carrier Aggregation (CA), a scenario of Dual Connectivity (DC), or a scenario of Standalone (SA).

Optionally, the communication system in the embodiments of the disclosure may be applied to an unlicensed spectrum, herein the unlicensed spectrum may also be considered as a shared spectrum; or, the communication system in the embodiments of the disclosure may also be applied to a licensed spectrum, herein the licensed spectrum may also be considered as a non-shared spectrum.

Each embodiment is described in connection with a network device and a terminal device in embodiments of the disclosure. The terminal device may also be referred to as a User Equipment (UE), an access terminal, a user unit, a user station, a mobile station, a remote station, a remote terminal, a mobile device, a user terminal, a terminal, a wireless communication device, a user agent or a user apparatus, etc.

The terminal device may be a station (ST) in the WLAN, a cellular telephone, a cordless telephone, a Session Initiation Protocol (SIP) telephone, a Wireless Local Loop (WLL) station, a Personal Digital Processing (PDA) device, a handheld device having a wireless communication function, a computing device or other processing device connected to a wireless modem, an on-board equipment, a wearable device, a next generation communication system (such as a terminal device in an NR network), or a terminal device in a future evolved Public Land Mobile Network (PLMN), etc.

In embodiments of the disclosure, the terminal device may be arranged on land including indoor or outdoor areas, handheld, wearable or on-board; the terminal device may also be arranged on the water (such as on a ship); the terminal device may further be arranged on the air (such as on an airplane, a balloon, or a satellite).

In embodiments of the disclosure, the terminal device may be a mobile phone, a tablet computer ( or Pad), a computer with wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, or a wireless terminal equipment in a smart home, etc.

As an example rather than a limitation, in embodiments of the disclosure, the terminal device may also be a wearable device. The wearable device can also be referred to as wearable intelligent device, which are a general name of the wearable devices developed by applying a wearable technology to intelligently design the daily wear, such as glasses, gloves, watch, clothing and shoes. The wearable device is a portable device that is worn directly on the body or integrated into the user's clothes or accessories. The wearable device is not only a kind of hardware device, but also a kind of device realizing powerful functions through software support, data interaction and cloud interaction. Generalized wearable smart devices include: a device with full functions and large size (such as smart watch or smart glasses), which can implement complete or partial functions without relying on a smart phone; and a device only focusing on a certain application function (such as various smart bracelets and smart jewelries for monitoring physical signs), which need to be used in conjunction with other devices (such as smart phone).

In embodiments of the disclosure, the network device may be a device for communicating with a mobile device, and the network device may be an Access Point (AP) in a WLAN, a Base Transceiver Station (BTS) in a GSM or CDMA, a NodeB (NB) in a WCDMA, an Evolved Node B (eNB or eNodeB), a relay station or an AP, an on-board equipment or a wearable device in a LTE, a gNB in an NR network or a network device in a future evolved PLMN network, etc.

As an example rather than a limitation, in embodiments of the disclosure, the network device may have mobility, for example, the network device may be a mobile device. Optionally, the network device can be a satellite or a balloon station. For example, the satellite may be an LEO satellite, an MEO satellite, a GEO satellite, an HEO satellite, or the like. Optionally, the network device can also be a base station arranged on land, water and the like.

In embodiments of the disclosure, the network device can provide services for a cell, and the terminal device communicates with the network device through the transmission resources (such as frequency domain resources, also called spectrum resources) used by the cell. The cell may be a cell corresponding to the network device (e.g., base station), and the cell may belong to a macro base station or a base station corresponding to a small cell. The small cell may include a metro cell, a micro cell, a pico cell, a femto cell, etc. These small cells have characteristics of small coverage and low transmission power, which are suitable for providing services of high-speed data transmission.

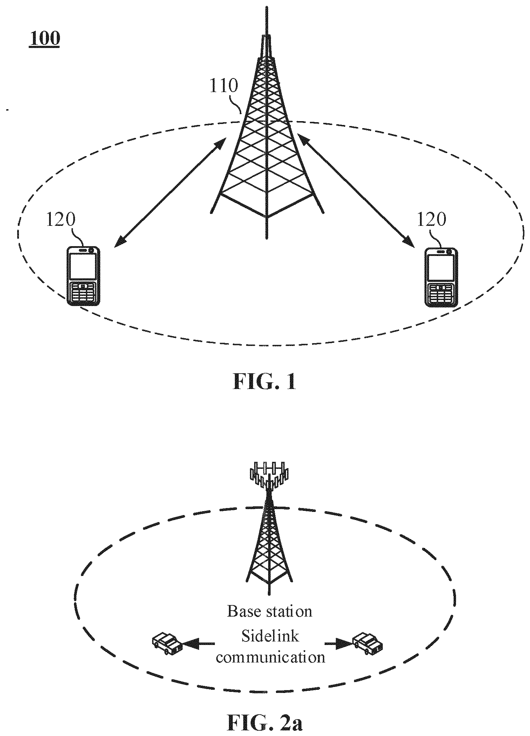

FIG. 1 exemplarily shows a communication system 100. The communication system includes one network device 110 and two terminal devices 120. Optionally, the communication system 100 may include multiple network devices 110, and there may be another number of terminal devices 120 in coverage of each network device 110. No limits are made thereto in the embodiments of the disclosure.

Optionally, the wireless communication system 100 may further include another network entity, such as a Mobility Management Entity (MME) and an Access and Mobility Management Function (AMF) entity. No limits are made thereto in the embodiments of the disclosure.

The network device may further include an access network device and a core network device. That is, the wireless communication system further includes multiple core networks configured to communicate with the access network device. The access network device may be an evolutional Node B (referred to as eNB or e-NodeB for short), a macro base station (ST), a micro ST (also referred to as "small ST"), a pico ST, an Access Point (AP), a Transmission Point (TP) or new generation node B (a gNodeB) in the LTE system, a next generation (mobile communication system) Next Radio (NR) system or an License Assisted Access Long-Term Evolution (LAA-LTE) system, or the like.

It is to be understood that a device with a communication function in a network/a system in the embodiments of the disclosure may be called a communication device. Taking a communication system as shown in FIG. 1 as an example, the communication device may include a network device and a terminal device with a communication function. The network device and the terminal device may be specific devices as described above, which will not be elaborated here. The communication device may further include another device, for example, another network entity, such as a network controller and an MME. No limits are made thereto in the embodiments of the disclosure.

It is to be understood that terms "system" and "network" herein are usually interchangeable herein. As used herein, term "and/or" is only an association relationship describing associated objects, and represents that three relationships may exist. For example, A and/or B may represent three conditions: i.e., existence of only A, existence of both A and B, and existence of only B. In addition, character "/" herein usually represents that previous and next associated objects form an "or" relationship.

It is to be understood that the "indication" mentioned in the embodiments of the disclosure may be direct indication, or indirect indication, or represent that there is an association relationship. For example, A indicating B may represent that A directly indicates B, for example, B may be acquired through A, or represent that A indirectly indicates B, for example, A indicates C, and B may be acquired through C, or represent that there is an association relationship between A and B.

In the description of the embodiments of the disclosure, the term "correspondence" may represent that there is a direct or indirect correspondence between the two elements, or that there is an association relationship between the two elements, or that there is a relationship in which one element indicates or is indicated by the other element, or one element configures or is configured by the other element, and the like.

In order to facilitate the understanding of the technical solutions of the embodiments of the disclosure, the related art of the embodiments of the disclosure is described below, and the following related art may be arbitrarily combined with the technical solutions of the embodiments of the disclosure as an optional solution, and all fall within the scope of protection of the embodiments of the disclosure.

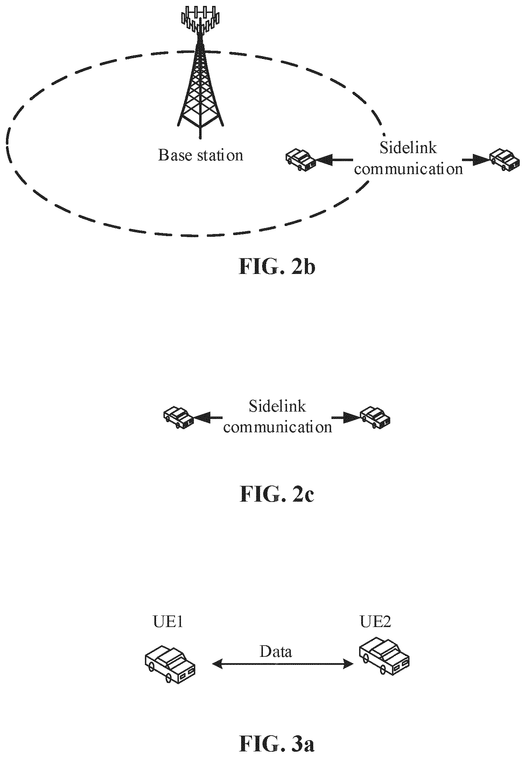

The technical solutions of the embodiments of the disclosure may be applied to SL communication under different network coverage environments. The SL communication may be classified into various types according to the network coverage where a terminal for communication is located. For example, SL communication within the network coverage, SL communication within the partial network coverage and SL communication outside the network coverage are shown in FIG. 2a, FIG. 2b and FIG. 2c respectively.

As shown in FIG. 2a, in the SL communication within the network coverage, all the terminals for performing SL communication are located within the coverage of the same base ST, and thus the terminals may perform SL communication based on the same SL configuration by receiving configuration signaling of the base ST.

As shown in FIG. 2b, in a case of the SL communication within the partial network coverage, part of the terminals for performing SL communication are located within the coverage of the base ST. The part of the terminals may receive the configuration signaling of the base ST and perform SL communication according to the configuration of the base ST. However, a terminal outside the network coverage may not receive the configuration signaling of the base ST. In this case, the terminal outside the network coverage will determine the SL configuration according to pre-configuration information and information carried in a Physical Sidelink Broadcast Channel (PSBCH) sent by the terminal within the network coverage, and perform SL communication.

As shown in FIG. 2c, for the SL communication outside the network coverage, all the terminals for performing the SL communication are located outside the network coverage, and all the terminals determine the SL configuration according to the pre-configuration information, and perform SL communication.

### Regarding D2D/V2X

D2D communication is an SL-based transmission technology. Unlike a conventional cellular system in which communication data is received or sent by the base ST, a D2D system has higher spectral efficiency and lower transmission delay. A V2X system uses a direct terminal-to-terminal communication mode.

In a 3rd Generation Partnership Project (3GPP) protocol, D2D/V2X includes two transmission modes: a first mode and a second mode.

In the first mode, a transmission resource of the terminal is allocated by the base ST. The terminal sends data on an SL according to the resource allocated by the base ST. The base ST may allocate a resource for single transmission to the terminal, or may allocate a resource for semi-persistent transmission to the terminal. As shown in FIG. 2a, the terminal is located within the network coverage, and the network allocates the transmission resource for SL transmission to the terminal.

In the second mode, the terminal selects a resource from a resource pool to transmit data. As shown in FIG. 2c, the terminal is located outside the coverage of a cell, and the terminal autonomously selects a transmission resource from a pre-configured resource pool for SL transmission. Or, as shown in FIG. 2a, the terminal autonomously selects a transmission resource from the resource pool configured by the network for SL transmission.

NR-V2X needs to support self-driving, and thus higher requirements, for example, higher throughput, lower delay, higher reliability, wider coverage, and more flexible resource allocation, are made to data interaction between vehicles.

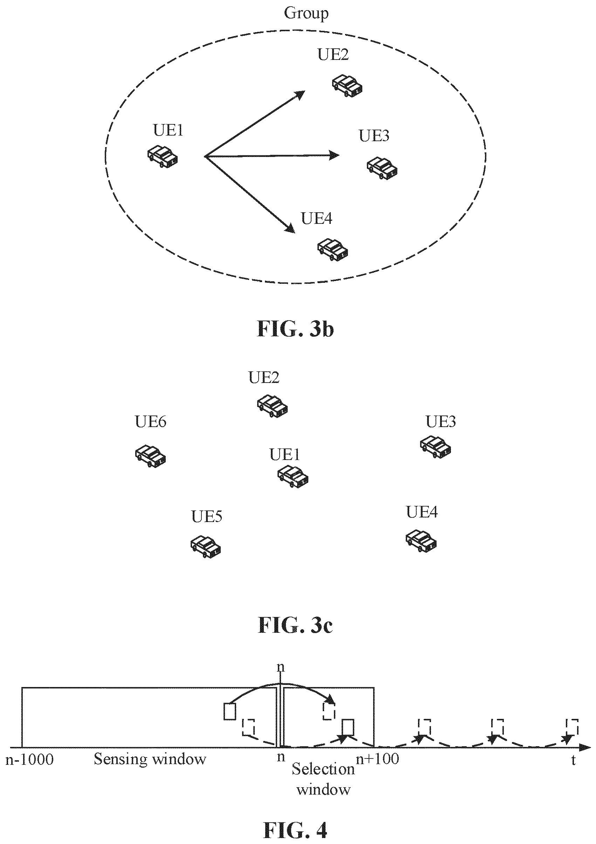

LTE-V2X supports a broadcast transmission mode. Unicast and multicast transmission modes are introduced to NR-V2X. A receiving-end terminal of unicast transmission is only one terminal. As shown in FIG. 3a, unicast transmission is performed between UE1 and UE2. A receiving end of multicast transmission is all terminals in a communication group, or all terminals within a certain transmission distance. As shown in FIG. 3b, UE1, UE2, UE3, and UE4 form the communication group, where UE1 sends data, and the other terminal devices in this group are receiving-end terminals. A receiving end of the broadcast transmission mode is any terminal. As shown in FIG. 3c, UE1 is a transmitter terminal, and other terminals around, UE2 to UE6 are all receiving-end terminals.

A sensing-based resource selection method is as follows.

LTE-V2X supports full or partial sensing. The full sensing includes: the terminal may sense data sent by other terminals in all time slots (or subframes) except for a time slot in which the data is sent. The partial sensing is for the terminal to save energy, and the terminal only needs to sense over part of the time slots (or subframes) and perform resource selection based on a result of the partial sensing.

In one case, when the partial sensing is not configured by a higher layer, resource selection may be performed by default in a manner of full sensing. Exemplarily, a process of performing resource selection based on full sensing includes: in a case where a new data packet arrives or a higher layer requires a physical layer to report an available resource set in a time slot n, the terminal needs to perform resource selection according to a sensing result. For example, the terminal may perform resource selection within a period of time (which may be referred to as a resource selection window) after the time slot n, i.e., within [n+T₁, n+T₂] milliseconds, according to the sensing result in the past 1 second, where T₁<=4, *T*₂ₘᵢₙ(*prio_{TX})* ≤*T*₂ ≤100*. T*₂ₘᵢₙ *(prio_{TX})* is a lower limit of T₂. Furthermore, T₁ should be selected as being greater than a processing delay of the terminal, and T₂ needs to be selected as being within a delay requirement of a service. For example, referring to FIG. 4, a sensing window of the terminal may be between [n-1000, n-1], and the selection window is [n+1, n+100].

In an LTE-V2X system, a process of performing, by the terminal, resource selection in the selection window may include: the terminal uses all available resources in the selection window as a set A. The terminal performs an exclusion operation on the resources in the set A. The process may specifically include the following operations.

At S1, if the terminal does not have the sensing result in some of the subframes in the sensing window, then resources on subframes corresponding to these subframes in the selection window are excluded in the set A.

At S2, if the terminal detects a Physical Sidelink Control Channel (PSCCH) in the sensing window, Reference Signal Received Power (RSRP) of the scheduled Physical Sidelink Shared Channel (PSSCH) is measured. If the measured PSSCH-RSRP is higher than a PSSCH-RSRP threshold and there is a resource conflict between a reserved transmission resource determined according to reservation information in control information and data to be sent by the terminal, the terminal excludes the resource from the set A. The selection of the PSSCH-RSRP threshold is determined by detected priority information carried in the PSCCH and the priority of data to be transmitted by the terminal.

At S3, if the number of remaining resources in the set A is less than X%, for example, 20%, of the total number of resources, the terminal may raise a threshold value of the PSSCH-RSRP, for example, 3dB, Sl to S2 are repeated until the number of remaining resources in the set A is greater than X% of the total number of resources, and at this time, the set A is determined to be an available resource set (or referred to as a candidate resource set). X is a parameter configured by the higher layer.

At S4, the terminal performs Sidelink Received Signal Strength Indicator (S-RSSI) detection on the remaining resources in the set A, and ranks detection results according to the energy level, and places part of the resources with the lowest energy, for example 20% (relative to the number of resources in the set A), into a set B.

At S5, the terminal selects a resource from the set B for data transmission with equal probability.

In another case, when a higher layer configuration performs selection based on partial sensing, a specific example of a sensing process may include: with respect to a full sensing mode, the terminal based on the partial sensing selects Y time slots in the resource selection window, and determines whether the resources in the Y time slots may be used as candidate resources according to the sensing result. If yes, the resources are placed in the set *S_{B} .* If the number of elements in the set *S_{B}* is greater than or equal to 20% of the total number of resources in the Y time slots, the terminal may report *S_{B}* to the higher layer.

Regarding DRX mechanism of an NR Uu port
in a wireless network, when data needs to be transmitted, UE needs to always sense a Physical Downlink Control Channel (PDCCH), and receive/send the data according to an indication message sent by a network side, thereby resulting in relatively large power consumption of the UE and relatively large delay for data transmission. Therefore, a 3GPP standard protocol introduces an energy saving strategy of the DRX mechanism in the LTE system.

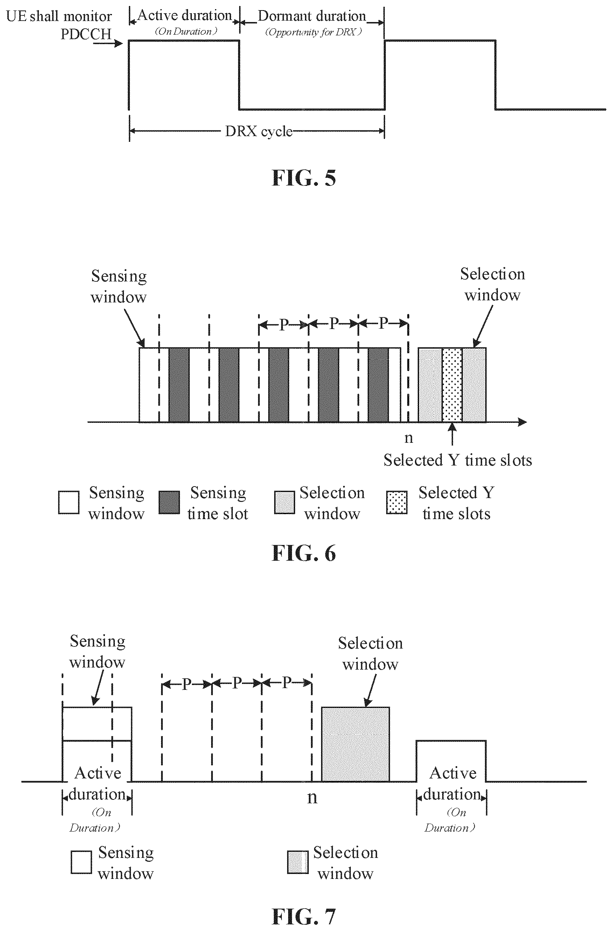

Referring to FIG. 5, the UE in a Radio Resource Control Connected (RRC_CONNECTED) state is configured with one DRX cycle. The DRX cycle consists of an "on duration" and an "opportunity for DRX". During the "on duration", the UE senses and receives the PDCCH, and the on duration may be referred to as an Active Duration. During the "opportunity for DRX", the UE does not receive the PDCCH to reduce power consumption, and the opportunity for DRX may be referred to as a dormant duration or an Inactive Duration. With respect to the DRX on duration, the opportunity for DRX may also be referred to as a DRX off duration.

In a DRX operation, the terminal controls the on duration and the off duration of the terminal according to some timer parameters configured by the network.

Regarding a DRX mechanism of the SL

In an energy saving and consumption reduction mechanism of the terminal, in order to achieve the purpose of energy saving, the DRX mechanism is considered to be introduced into the SL, namely SL DRX. Similar to the DRX mechanism of the Uu port, the terminal receives data sent by other terminals within the range of the on duration, and enters a dormant state within the range of the DRX off duration if no data is detected, so as to save power consumption.

Another technology to achieve power saving is the partial sensing. As described above, the terminal does not perform sensing at all times, but only part of the time slots. Resource selection is performed according to the sensing results of the part of the time slots so as to achieve the purpose of energy saving, as shown in FIG. 6.

If the energy saving solutions of the SL DRX and the partial sensing are combined in the SL, it needs to be considered whether the terminal may perform sensing during the DRX off duration. If sensing may not be performed during the DRX off duration, the terminal may only perform sensing during the DRX on duration, and perform resource selection according to the sensing result, as shown in FIG. 7. P is a sensing cycle. When data arrives in the time slot n, the terminal determines the selection window, and determines the size and position of the sensing window according to the active duration, and the terminal determines the candidate resource set in the selection window according to the sensing result of the sensing window, and performs resource selection.

However, if the time of arrival of the terminal service is far from the time of the DRX active duration, such as the DRX on duration, it may lead to inaccuracy of the sensing result during the DRX on duration, which in turn leads to inaccurate resource selection. Referring to FIG. 7, it is possible to select a transmission resource having a conflict with other terminals, thereby reducing transmission reliability.

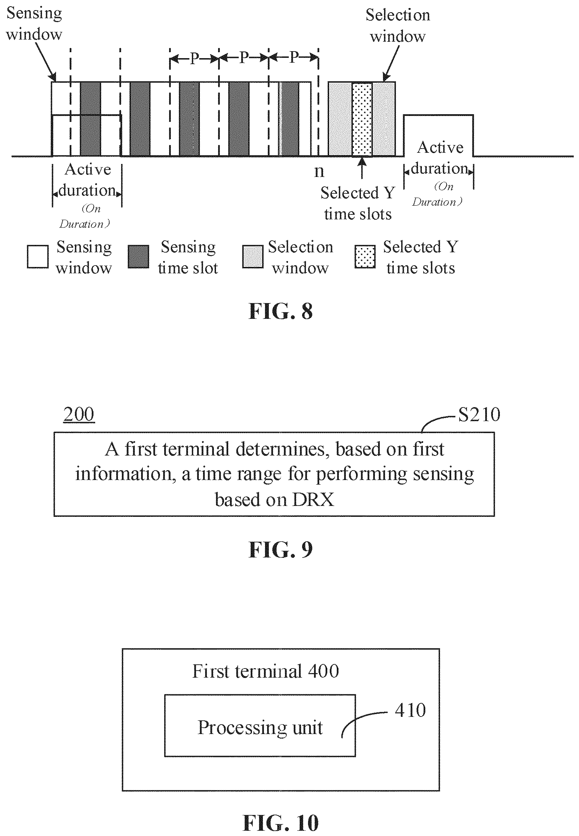

If sensing can be performed during the DRX dormant duration, such as the DRX off duration, the terminal may acquire a more accurate sensing result. A probability of the resource conflict of the transmission resource selected by the terminal according to the sensing result is reduced, and the transmission reliability may be improved. However, since sensing is also required during the DRX off duration, an energy saving effect of the terminal may be affected, referring to FIG. 8.

FIG. 9 is a schematic flowchart of a DRX-based sensing method 200 according to an embodiment of the disclosure. The method may optionally be applied, but not limited, to the system shown in FIG. 1 to FIG. 3c. The method includes at least part of the following contents.

At S210, a first terminal determines, based on first information, a time range for performing sensing based on DRX.

In the embodiments of the disclosure, DRX may be combined with sensing, for example, the first terminal may determine, based on the first information, whether sensing is performed during a DRX dormant duration, such as a DRX off duration. Specifically, for example, it may be determined whether sensing is performed during the DRX dormant duration.

In the invention, the sensing includes partial sensing, optionally and not part of the invention, sensing includes full sensing.

In the invention, the first information includes indication information.

Optionally, the indication information is configured to indicate that sensing is performed within a first time range or sensing is performed within a second time range. For example, the indication information is configured to indicate that sensing is performed during a DRX active duration or sensing is performed during the DRX dormant duration. In the invention, the indication information is configured to indicate whether sensing is allowed to be performed during the DRX dormant duration. Alternatively, however not part of the invention, the indication information is configured to indicate that sensing is performed only during the DRX active duration, or sensing is performed during both the DRX active duration and the DRX dormant duration.

Optionally, the indication information is pre-configuration information or network configuration information. The pre-configuration information may be determined in a manner specified by a protocol. For example, the pre-configuration information may be stored in the first terminal. After acquiring the pre-configuration information, the first terminal may perform sensing within the first time range or perform sensing the second time range based on the pre-configuration information. For another example, a network device may send the network configuration information to the first terminal, and after receiving the network configuration information from the network device, the first terminal may determine based on the network configuration information that sensing is performed within the first time range or sensing is performed within the second time range.

Optionally, the network configuration information is at least one of System Information Block (SIB) information, Radio Resource Control (RRC) signaling, or Downlink Control Information (DCI) signaling.

For example, a network sends the RRC signaling to the terminal, and the RRC signaling includes the indication information configured to indicate that sensing is performed within the first time range.

For another example, the network sends the RRC signaling to the terminal, and the RRC signaling configures that sensing may be performed within the first time range or within the second time range. Further, the network sends DCI to the terminal, and the DCI indicates that sensing is performed within the first time range.

Optionally, the indication information is from a second terminal. For example, in a case of SL transmission, the first terminal may receive the indication information from the second terminal.

Optionally, the second terminal is a receiving end of data of the first terminal, or a group head terminal of a communication group in which the first terminal is located. The group head terminal may have at least one of the following functions: resource coordination, resource scheduling, resource allocation, resource management, group member management, etc.

Optionally, the indication information is carried in Sidelink Control Information (SCI), a Medium Access Control (MAC) Control Element (CE) or PC5-RRC signaling. The SCI may be first stage SCI or second stage SCI. Specifically, in a case of SL transmission, the indication information may be carried in the SCI, the MAC CE or the PC5-RRC signaling from the second terminal.

In NR-V2X, the first stage SCI may be carried by a PSCCH, and the first stage SCI is for indicating transmission resources, reserved resource information, a Modulation and Coding Scheme (MCS) level, a priority and other information of a PSSCH. The second stage SCI may be sent in a resource of the PSSCH, and is demodulated using a Demodulation Reference Signal (DMRS) of the PSSCH, and the second stage SCI is for indicating information for data demodulation, such as a transmitter Identifier (ID), a receiving end ID, a Hybrid Automatic Repeat Request (HARQ) ID, a New Data Indicator (NDI), etc.

Optionally, the first information includes a first parameter. Exemplarily, the time range for performing sensing based on DRX may be determined by the indication information in combination with the first parameter. Specifically, the indication information may indicate various thresholds and/or correspondences that are for determining the time range based on the first parameter. The terminal may determine the time range for performing sensing, according to the first parameter as well as the threshold and/or correspondence indicated by the indication information.

Optionally, the first parameter includes at least one of the following parameters: a priority, delay, reliability, a Channel Busy Ratio (CBR), a service type, or a logical channel. The delay, the reliability and the priority belong to Quality of Service (QoS) parameters.

Optionally, the operation that the first terminal determines, based on the first information, the time range for performing sensing based on the DRX includes: the first terminal determines, based on the first parameter and a first threshold, the time range for performing sensing based on the DRX. Specifically, different first parameters may correspond to different first thresholds. For example, the priority corresponds to a priority threshold, the delay corresponds to a delay threshold, the reliability corresponds to a reliability threshold, and the CBR corresponds to a CBR threshold. Values of the thresholds corresponding to different parameters may be the same or different, and may be configured flexibly according to the requirements of practical applications. No limits are made thereto in the embodiments of the disclosure.

Optionally, the operation that the first terminal determines, based on the first parameter and the first threshold, the time range for performing sensing based on DRX includes at least one of the following operations.

In a case where a reliability requirement is lower than the reliability threshold, it is determined that sensing is performed within the first time range.

In a case where the reliability requirement is higher than or equal to the reliability threshold, it is determined that sensing is performed within the second time range. The first threshold includes the reliability threshold.

In one implementation, the reliability requirement lower than the reliability threshold may represent that high reliability does not need to be ensured. In this case, the first terminal may perform sensing only during the DRX on duration. The first terminal selects resources only according to the sensing result during the DRX on duration, and then performs transmission.

In another implementation, the reliability requirement higher than or equal to the reliability threshold may represent that high reliability needs to be ensured. In this case, the first terminal may perform sensing during the DRX on duration and the DRX off duration. The first terminal selects the resources according to the sensing results during the DRX on duration and the DRX off duration, and then performs transmission.

Optionally, the operation that the first terminal determines, based on the first parameter and the first threshold, the time range for performing sensing based on DRX includes at least one of the following operations.

In a case where a level value of the priority is higher than the priority threshold, it is determined that sensing is performed within the first time range.

In a case where the level value of the priority is lower than or equal to the priority threshold, it is determined that sensing is performed within the second time range. The first threshold includes the priority threshold.

Exemplarily, the lower the level value of the priority, the higher the priority; and the higher the level value of the priority, the lower the priority.

In one implementation, in a case where the level value of the priority is higher than the priority threshold (that is, the priority is low), the first terminal performs sensing only during the DRX on duration and not during the DRX off duration. The first terminal selects the resources only according to the sensing result during the DRX on duration, and then performs transmission. In a case where the level value of the priority is lower than the priority threshold (that is, the priority is high), the first terminal may perform sensing during the DRX on duration and the DRX off duration. The first terminal selects the resources according to the sensing results during the DRX on duration and the DRX off duration, and then performs transmission.

In another implementation, in a case where the level value of the priority is lower than the priority threshold (that is, the priority is low), the first terminal performs sensing only during the DRX on duration and not during the DRX off duration. The first terminal selects the resources only according to the sensing result during the DRX on duration, and then performs transmission. In a case where the level value of the priority is higher than the priority threshold (that is, the priority is high), the first terminal may perform sensing during the DRX on duration and the DRX off duration. The first terminal selects the resources according to the sensing results during the DRX on duration and the DRX off duration, and then performs transmission.

Optionally, the operation that the first terminal determines, based on the first parameter and the first threshold, the time range for performing sensing based on DRX includes at least one of the following operations.

In a case where a delay requirement is higher than the delay threshold, it is determined that sensing is performed within the first time range.

In a case where the delay requirement is lower than or equal to the delay threshold, it is determined that sensing is performed within the second time range. The first threshold includes the delay threshold.

In one implementation, in a case where the delay requirement is higher than the delay threshold, the first terminal performs sensing only during the DRX on duration and not during the DRX off duration. The first terminal selects the resources only according to the sensing result during the DRX on duration, and then performs transmission. In a case where the delay requirement is lower than the delay threshold, the first terminal may perform sensing during the DRX on duration and the DRX off duration. The first terminal selects the resources according to the sensing results during the DRX on duration and the DRX off duration, and then performs transmission.

In another implementation, in a case where the delay requirement is lower than the delay threshold, the first terminal performs sensing only during the DRX on duration and not during the DRX off duration. The first terminal selects the resources only according to the sensing result during the DRX on duration, and then performs transmission. In a case where the delay requirement is higher than the delay threshold, the first terminal may perform sensing during the DRX on duration and the DRX off duration. The first terminal selects the resources according to the sensing results during the DRX on duration and the DRX off duration, and then performs transmission.

Optionally, the operation that the first terminal determines, based on the first parameter and the first threshold, the time range for performing sensing based on DRX includes at least one of the following operations.

In a case where the CBR is lower than the CBR threshold, it is determined that sensing is performed within the first time range.

In a case where the CBR is higher than or equal to the CBR threshold, it is determined that sensing is performed within the second time range. The first threshold includes the CBR threshold.

Exemplarily, the CBR lower than the CBR threshold may represent that a channel is relatively idle. In a case where the channel is relatively idle, the terminal may perform sensing during the DRX on duration and not during the DRX off duration. At this time, the first terminal performs resource selection only based on the sensing result of the DRX on duration, and a probability of resource conflicts with other terminals is also relatively low.

Exemplarily, the CBR higher than or equal to the CBR threshold may represent that the channel is relatively congested. In a case where the channel is relatively congested, the first terminal may perform sensing during the DRX off duration. At this time, the first terminal performs resource selection according to the sensing results during the DRX on duration and the DRX off duration, so as to avoid the resource conflicts with other terminals as much as possible and ensure transmission reliability.

Optionally, the operation that the first terminal determines, based on first information, the time range for performing sensing based on DRX further includes: the first terminal determines, based on a service type of the first terminal and a first correspondence, the time range for performing sensing based on DRX. The first correspondence is a correspondence between the service type and the DRX sensing time range.

For example, the first correspondence includes: a service type 1 corresponds to performing sensing only during the DRX on duration, and a service type 2 corresponds to performing sensing during the DRX on duration and the DRX off duration. If the current service type of the first terminal is the service type 1, the first terminal may perform sensing only during the DRX on duration and not during the DRX off duration, based on the first correspondence. If the current service type of the first terminal is the service type 2, the first terminal may perform sensing during the DRX on duration and the DRX off duration, based on the first correspondence.

Optionally, the operation that the first terminal determines, based on first information, the time range for performing sensing based on DRX further includes: the first terminal determines, based on a logical channel of the first terminal and a second correspondence, the time range for performing sensing based on DRX. The second correspondence is a correspondence between the logical channel and the DRX sensing time range.

For example, the second correspondence includes: a logical channel 1 corresponds to performing sensing only during the DRX on duration, and a logical channel 2 corresponds to performing sensing during the DRX on duration and the DRX off duration. If the current logical channel of the first terminal is the logical channel 1, the first terminal may perform sensing only during the DRX on duration and not during the DRX off duration, based on the first correspondence. If the current logical channel of the first terminal is the logical channel 2, the first terminal may perform sensing during the DRX on duration and the DRX off duration, based on the second correspondence.

Exemplarily, the time range for performing sensing based on DRX may be determined based on one first parameter, or at least two first parameters. For example, the time range for performing sensing based on DRX may be determined by the CBR in combination with one of the priority, the delay or the reliability. In addition, the time range for performing sensing based on DRX may also be determined by the reliability or the priority in combination with the service type or the logical channel.

For example, if the CBR is higher than the first threshold and the priority is higher than the second threshold, the first terminal performs sensing during the DRX dormant duration, otherwise the first terminal performs sensing during the DRX active duration; or, if the CBR is lower than the first threshold and the priority is lower than the second threshold, the first terminal performs sensing during the DRX active duration, otherwise the first terminal performs sensing during the DRX dormant duration.

For another example, if the CBR is higher than the first threshold and the reliability requirement is higher than the second threshold, the first terminal performs sensing during the DRX dormant duration, otherwise the first terminal performs sensing during the DRX active duration; or, if the CBR is lower than the first threshold and the reliability requirement is lower than the second threshold, the first terminal performs sensing during the DRX active duration, otherwise the first terminal performs sensing during the DRX dormant duration.

For another example, if the CBR is higher than the first threshold and the delay is less than the second threshold, the first terminal performs sensing during the DRX dormant duration, otherwise the first terminal performs sensing during the DRX active duration; or, if the CBR is lower than the first threshold and the delay is greater than the second threshold, the first terminal performs sensing during the DRX active duration, otherwise the first terminal performs sensing during the DRX dormant duration.

For another example, if the reliability requirement is higher than the first threshold and the service type corresponds to performing sensing during the DRX dormant duration, the first terminal performs sensing during the DRX dormant duration, otherwise the first terminal performs sensing during the DRX active duration. Or, if the reliability requirement is lower than the first threshold and the service type corresponds to performing sensing only during the DRX active duration, the first terminal performs sensing during the DRX active duration, otherwise the first terminal performs sensing during the DRX dormant duration.

Optionally, the first information includes energy saving information.

Optionally, the energy saving information includes at least one of:
battery level information of the terminal; or
energy saving level information of the terminal.

Exemplarily, the time range for performing sensing based on DRX may be determined by the indication information in combination with the energy saving information. Specifically, the indication information may indicate various thresholds and/or correspondences that are for determining the time range based on the energy saving information. The terminal may determine the sensing time range according to the energy saving information and the threshold and/or correspondence indicated by the indication information.

Optionally, the operation that the first terminal determines, based on first information, the time range for performing sensing based on DRX further includes: the first terminal determines, based on the battery level information of the first terminal and a third threshold, the time range for performing sensing based on DRX.

In addition, during the determining, based on the battery level information and the third threshold, the time range for performing sensing based on DRX, a specific value of the third threshold may be different from specific values of the first threshold and the second threshold occurring during the determining, based on the first parameter, the time range for performing sensing based on the DRX.

Optionally, the operation that the first terminal determines, based on the battery level information of the first terminal and the third threshold, the time range for performing sensing based on DRX includes at least one of the following.

In a case where the remaining battery level of the first terminal is lower than the third threshold, it is determined that sensing is performed within the first time range.

In a case where the remaining battery level of the first terminal is higher than or equal to the third threshold, it is determined that sensing is performed within the second time range.

For example, the battery level information of the first terminal may include the remaining battery level. The less the remaining battery level, the higher the energy saving demand, and the more the remaining battery level, the lower the energy saving demand. In a case where the remaining battery level of the first terminal is lower than the third threshold, the first terminal performs sensing only during the DRX on duration. In a case where the remaining battery level of the first terminal is higher than the third threshold, the first terminal may perform sensing during the DRX on duration and the DRX off duration.

Optionally, the operation that the first terminal determines, based on first information, the time range for performing sensing based on DRX further includes: the first terminal determines, based on the energy saving level information of the first terminal and a third correspondence, the time range for performing sensing based on DRX. The third correspondence is a correspondence between the energy saving level information of the terminal and the DRX sensing time range.

Exemplarily, the larger the value of the energy saving level, the higher the energy saving demand, and the smaller the value of the energy saving level, the lower the energy saving demand. Or, the larger the value of the energy saving level, the lower the energy saving demand, and the smaller the value of the energy saving level, the higher the energy saving demand. Specifically, the value of the energy saving level may be set flexibly according to the actual application scenario. No limits are made thereto in the embodiments of the disclosure.

For example, the third correspondence includes: an energy saving level 1 corresponds to performing sensing only during the DRX on duration, and an energy saving level 2 corresponds to performing sensing during the DRX on duration and the DRX off duration. If the current energy saving level of the first terminal is the energy saving level 1, the first terminal may perform sensing only during the DRX on duration based on the third correspondence, and not during the DRX off duration. If the current energy saving level of the first terminal is the energy saving level 2, the first terminal may perform sensing during the DRX on duration and the DRX off duration based on the third correspondence.

For another example, the third correspondence includes: an energy saving level 4 corresponds to performing sensing only during the DRX on duration, and an energy saving level 3 corresponds to performing sensing during the DRX on duration and the DRX off duration. If the current energy saving level of the first terminal is the energy saving level 4, the first terminal may perform sensing only during the DRX on duration based on the third correspondence, and not during the DRX off duration. If the current energy saving level of the first terminal is the energy saving level 3, the first terminal may perform sensing during the DRX on duration and the DRX off duration based on the third correspondence.

Optionally, the operation that sensing is performed within the first time range includes at least one of the following.

Sensing is performed during the DRX active duration.

Sensing is performed during the DRX dormant duration.

Sensing is performed during the DRX active duration and the DRX dormant duration.

Optionally, the operation that sensing is performed within the second time range includes at least one of the following.

Sensing is performed during the DRX active duration.

Sensing is performed during the DRX dormant duration.

Sensing is performed during the DRX active duration and the DRX dormant duration.

The first time range and the second time range are different.

Specifically, the time range for performing sensing based on DRX may include at least one of the first time range or the second time range. For example, the operation that sensing is performed within the first time range may include: sensing is performed only during the DRX active duration or not allowed during the DRX dormant duration. For another example, the operation that sensing is performed within the second time range may include: sensing is performed during the DRX dormant duration, or sensing is performed during the DRX active duration and the DRX dormant duration.

Optionally, at least one of the first threshold, the second threshold, the third threshold, the first correspondence, the second correspondence, the third correspondence or the like in the embodiments of the disclosure may be determined according to the pre-configuration information, may also be determined according to the network configuration information, and may also be determined according to configuration information of a second terminal device.

The following are some specific examples of determining, based on the first information, the time range for performing sensing in the embodiments of the disclosure. In these examples, the first information may include at least one of the indication information, the first parameter, or the energy saving information. The operation that the time range for performing sensing is determined may include at least one of the following.

Sensing is performed only during the DRX on duration.

Sensing is not allowed during the DRX off duration.

Sensing can be performed during the DRX off duration.

Sensing is performed during the DRX on duration and the DRX off duration.

Optionally, if the first terminal determines, based on the first information, that sensing can be performed during the DRX dormant duration, the first terminal may perform sensing during both the DRX active duration and the DRX dormant duration of one DRX cycle. After the DRX cycle ends, the first terminal may re-determine, based on the first information, whether sensing is performed during the DRX dormant duration.

Optionally, if the first terminal determines, based on the first information, that sensing can be performed during the DRX dormant duration, the first terminal may perform sensing during a certain period of time, for example, during both the DRX active duration and the DRX dormant duration of one or more set DRX cycles. After the period of time ends, the first terminal may re-determine, based on the first information, whether sensing is performed during the DRX dormant duration. The duration of the time period may be determined based on the pre-configuration information or the network configuration information.

Optionally, the first terminal may continue performing sensing during both the DRX active duration and the DRX dormant duration of the multiple DRX cycles after determining based on the first information that sensing is performed during the DRX dormant duration. Until the first terminal re-determines, based on the first information, that sensing is not performed during the DRX dormant duration (or sensing is performed only during the DRX active duration) at a certain time, the first terminal switches to performing sensing only during the DRX active duration of the DRX cycle.

Example 1: the first terminal acquires first indication information, and determines the time range for the first terminal to perform sensing according to the first indication information.

Example 1-1: the first indication information is determined according to the pre-configuration information or the network configuration information.

For example, the first indication information is included in resource pool configuration information, and the first indication information is configured to indicate whether sensing is allowed during the DRX off duration.

Optionally, if the first indication information is determined according to the network configuration information, the network configuration information may be, for example, the SIB information, the RRC signaling, or the DCI signaling.

Example 1-2: the first terminal receives the first indication information sent by the second terminal.

Optionally, the first indication information is carried in the SCI, the MAC CE or the PC5-RRC signaling. The SCI may be the first stage SCI or the second stage SCI.

Optionally, the second terminal is the receiving end of the data of the first terminal, or the group head terminal of the communication group in which the first terminal is located. The group head terminal may have at least one of functions: resource coordination, resource scheduling, resource allocation, resource management, group member management, etc.

Example 2: the first terminal determines the time range for the first terminal to perform sensing according to the first parameter.

Optionally, the first parameter is at least one of the priority, the delay, the reliability, the CBR, the service type, or the logical channel.

Further, the first terminal may acquire the first threshold and determine the time range for performing sensing according to the first parameter and the first threshold. For example, the first terminal may acquire the first threshold through the first indication information in Example 1 such as the pre-configuration information, the network configuration information or the configuration information from the second terminal.

Example 2-1: the first threshold is a reliability threshold THD1, for example, THD1=99%, and the first parameter is reliability. When the reliability requirement is lower than the first threshold, for example, when the reliability requirement is 90%, the first terminal performs sensing only during the DRX on duration and not during the DRX off duration. At this time, since the reliability requirement is not high, sensing is performed only during the DRX on duration and not during the DRX off duration, and the transmission resources selected according to the sensing results may have conflicts. However, since the reliability requirement is lower than the threshold, that is, the high reliability does not need to be ensured, the resources may be selected according to the sensing result during the DRX on duration, and then transmission is performed using the selected resources. When the reliability requirement is higher than the first threshold, for example, when the reliability requirement is 99.99%, the first terminal may perform sensing during the DRX off duration. At this time, the reliability requirement is higher than the threshold, so that the transmission reliability needs to be ensured preferentially, and resource selection is performed according to the sensing results during the DRX on duration and the DRX off duration.

Example 2-2: the first threshold is a delay threshold THD2, for example, THD2=10 ms, and the first parameter is the delay requirement. When the delay requirement is lower than the first threshold, for example, when the delay requirement is 5 ms, the first terminal performs sensing only during the DRX on duration and not during the DRX off duration. When the delay requirement is higher than the first threshold, for example, when the delay requirement is 20 ms, the first terminal may perform sensing during the DRX off duration. Alternatively, when the delay requirement is higher than the first threshold, for example, when the delay requirement is 20 ms, the first terminal performs sensing only during the DRX on duration and not during the DRX off duration When the delay requirement is lower than the first threshold, for example, when the delay requirement is 5 ms, the first terminal may perform sensing during the DRX off duration.

Example 2-3: the first threshold is a priority threshold THD3, for example, THD3=5, the range of the priority level is [0, 7], and the lower the level value of the priority, the higher the priority. That is, the level value 0 of the priority represents the highest priority, and the level value 7 of the priority represents the lowest priority. The first parameter is the priority, and when the level value of the priority is higher than the first threshold (that is, the priority is low), for example, when the level value of the priority is 7, the first terminal performs sensing only during the DRX on duration and not during the DRX off duration. When the level value of the priority is lower than the first threshold (that is, the priority is high), for example, when the level value of the priority is 2, the first terminal may perform sensing during the DRX off duration.

In addition, other representations of the priority may be used. For example, the higher the level value of the priority, the higher the priority. In this case, when the level value of the priority is lower than the first threshold (that is, the priority is low), the first terminal performs sensing only during the DRX on duration and not during the DRX off duration.). When the level value of the priority is higher than the first threshold (that is, the priority is high), the first terminal may perform sensing during the DRX off duration.

Example 2-4: the first threshold is a CBR threshold THD4, for example, THD3=0.5, the higher the CBR, the more congested the channel, that is, the higher the channel resource utilization, and the fewer free resources. Conversely, the lower the CBR, the idler the channel. The first parameter is the CBR, for example, the terminal acquires the CBR corresponding to the resource pool by measurement. When the CBR is lower than the first threshold (that is, the channel is relatively idle), for example, when the measured CBR=0.2, the first terminal performs sensing only during the DRX on duration and not during the DRX off duration. At this time, since the channel is relatively idle, when the terminal performs resource selection only based on the sensing result of the DRX on duration, the probability of resource conflicts with other terminals is also relatively low. When the CBR is higher than the first threshold (that is, the channel is relatively congested), for example, when CBR=0.7, the first terminal may perform sensing during the DRX off duration, and at this time, resource selection is performed according to the monitoring results during the DRX on duration and the DRX off duration, which may avoid the resource conflicts with other terminals as much as possible and ensure transmission reliability.

Optionally, the time range for performing sensing based on DRX may be determined by a combination of multiple first parameters. Different first parameters may be compared with different thresholds. For specific examples, reference may be made to the previous examples in which the first threshold and the second threshold are compared with different parameters in the embodiments.

Example 2-5: the terminal may transmit multiple types of SL services, and the terminal may determine the time range for performing sensing according to the service type. For example, for a first type of service, the terminal determines that sensing is performed only during the DRX on Duration. For a second type of service, the terminal determines that sensing is performed during the DRX off duration.

Further, the terminal acquires the configuration information, and the configuration information is configured to configure the correspondence between the service type and the time range for the terminal to perform sensing. For example, the first terminal may acquire the correspondence between the service type and the time range for the terminal to perform sensing by means of the first indication information in example 1, such as the pre-configuration information, the network configuration information or the configuration information from the second terminal.

For example, an example of the correspondence between the service type and the time range for the terminal to perform sensing may be as shown in Table 1 below.

**Table 1**

| Service type | First type | Second type | Third type |
|---|---|---|---|
| Sensing time range | DRX on duration | DRX on duration and DRX off duration | DRX on duration and DRX off duration |

Example 2-6: data to be transmitted of the terminal is mapped to different logical channels, and the time range for the terminal to perform sensing may be determined according to the logical channel. For example, for SL data in a first logical channel (Logical Channel Identity (LCID)=0), sensing is performed only during the DRX on duration; and for SL data in a second logical channel (LCID=1), sensing can be performed during the DRX off duration. The terminal may support multiple logical channels, such as a maximum of 8 or 16 logical channels.

Further, the terminal may acquire the configuration information, and the configuration information is configured to configure the correspondence between the LCID and the time range for the terminal to perform sensing. For example, the first terminal may acquire the correspondence between the LCID and the time range for the terminal to perform sensing by means of the first indication information in example 1, such as the pre-configuration information, the network configuration information or the configuration information from the second terminal.

For example, an example of the correspondence between the LCID and the time range for the terminal to perform sensing may be as shown in Table 2 below.

**Table 2**

| LCID | 0 | 1 |
|---|---|---|
| Sensing time range | DRX on duration | DRX on duration and DRX off duration |

Example 3: the first terminal acquires the energy saving information, and determines the time range for performing sensing according to the energy saving information.

Optionally, the energy saving information may include at least one of:
battery level information of the terminal; or
energy saving level information of the terminal.

Example 3-1: for a handheld terminal, energy saving is an urgent need, especially when the battery level of the terminal is very low. The terminal may acquire the battery level information of the terminal, such as the remaining battery level information of the terminal, and determine the time range for performing sensing according to the remaining battery level information.

Further, the time range for performing sensing is determined according to the third threshold and the battery level information. For example, the third threshold is 30%, and when the remaining battery level is less than 30%, the terminal performs sensing only during the DRX on duration; and when the remaining battery level is higher than 30%, the terminal may perform sensing during the DRX off duration.

Example 3-2: the energy saving level of the terminal may represent the energy saving requirement of the terminal. For example, the energy saving level is classified into four levels 0, 1, 2 and 3, and when the energy saving level of the terminal is 0 or 1, the terminal performs sensing only during the DRX on duration; and when the energy saving level of the terminal is 2 or 3, the terminal may perform sensing during the DRX off duration.

Further, the correspondence between the energy saving level and the sensing time range may be pre-configured or configured by the network configuration, and a specific example may be shown in Table 3.

**Table 3**

| Energy saving level | 0 | 1 | 2 | 3 |
|---|---|---|---|---|
| Sensing time range | DRX on duration | DRX on duration | DRX on duration and DRX off duration | DRX on duration and DRX off duration |

According to the indication information, the QoS parameter, the energy saving information or the like, the terminal determines whether sensing is performed during the DRX off duration, so that a compromise between energy saving and ensuring transmission reliability may be achieved according to different configurations and different conditions.

FIG. 10 is a schematic block diagram of a first terminal 400 according to an embodiment of the disclosure. The first terminal 400 may include a processing unit 410.

The processing unit 410 is configured to determine, based on first information, a time range for performing sensing based on DRX.

Optionally, the first information includes indication information. Exemplarily, the first information may directly indicate the time range for performing sensing based on DRX, or may indicate the time range for performing sensing based on DRX in combination with a first parameter, energy saving information, etc.

Optionally, the indication information is configured to indicate that sensing is performed within a first time range or sensing is performed within a second time range.

Optionally, the indication information is pre-configuration information or network configuration information.

Optionally, the network configuration information is at least one of SIB information, RRC signaling, or DCI signaling.

Optionally, the indication information is from a second terminal. For example, in a case of SL transmission, the first terminal may receive the indication information from the second terminal.

Optionally, the second terminal is a receiving end of data of the first terminal, or a group head terminal of a communication group in which the first terminal is located.

Optionally, the indication information is carried in SCI, a MAC CE or PC5-RRC signaling. The SCI is first stage SCI or second stage SCI. Specifically, in a case of SL transmission, the indication information may be carried in the SCI, the MAC CE or the PC5-RRC signaling from the second terminal.

Optionally, the first information includes a first parameter. Exemplarily, the time range for performing sensing based on DRX may be determined by the indication information in combination with the first parameter. Specifically, the indication information may indicate various thresholds and/or correspondences that are for determining the time range based on the first parameter. The terminal may determine the sensing time range according to the first parameter and the threshold and/or correspondence indicated by the indication information.

Optionally, the first parameter includes at least one of parameters: a priority, delay, reliability, a CBR, a service type, or a logical channel.

Optionally, the processing unit is further configured to determine, based on the first parameter and a first threshold, the time range for performing sensing based on DRX.

Optionally, the processing unit further configured to determine, based on the first parameter and the first threshold, the time range for performing sensing based on DRX is specifically configured to perform at least one of:
determining, in a case where a reliability requirement is lower than a reliability threshold, that sensing is performed within the first time range; or
determining, in a case where the reliability requirement is higher than or equal to the reliability threshold, that sensing is performed within the second time range, herein the first threshold includes the reliability threshold.

Optionally, the processing unit further configured to determine, based on the first parameter and the first threshold, the time range for performing sensing based on DRX is specifically configured to perform at least one of:
determining, in a case where a level value of the priority is higher than a priority threshold, that sensing is performed within the first time range; or
determining, in a case where the level value of the priority is lower than or equal to the priority threshold, that sensing is performed within the second time range, herein the first threshold includes the priority threshold.

Optionally, the processing unit further configured to determine, based on the first parameter and the first threshold, the time range for performing sensing based on DRX is specifically configured to perform at least one of:
determining, in a case where a delay requirement is higher than a delay threshold, that sensing is performed within the first time range; or
determining, in a case where the delay requirement is lower than or equal to the delay threshold, that sensing is performed within the second time range, herein the first threshold includes the delay threshold.

Optionally, the processing unit further configured to determine, based on the first parameter and the first threshold, the time range for performing sensing based on DRX is specifically configured to perform at least one of:
determining, in a case where the CBR is lower than a CBR threshold, that sensing is performed within the first time range; or
determining, in a case where the CBR is higher than or equal to the CBR threshold, that sensing is performed within the second time range, herein the first threshold includes the CBR threshold.

Optionally, the time range for performing sensing based on DRX may be determined by a combination of multiple first parameters. Different first parameters may be compared with different thresholds. For specific examples, reference may be made to the previous examples in which the first threshold and the second threshold are compared with different parameters in the embodiments.

Optionally, the processing unit is further configured to determine, based on the service type of the first terminal and a first correspondence, the time range for performing sensing based on DRX. The first correspondence is a correspondence between the service type and the DRX sensing time range.

Optionally, the processing unit is further configured to determine, based on the logical channel of the first terminal and a second correspondence, the time range for performing sensing based on DRX. The second correspondence is a correspondence between the logical channel and the DRX sensing time range.

Exemplarily, the time range for performing sensing based on DRX may be determined based on one first parameter, or at least two first parameters. For example, the sensing range is determined by the CBR in combination with one of the priority, the delay or the reliability.

Optionally, the first information includes energy saving information.

Optionally, the energy saving information includes at least one of:
battery level information of the terminal; or
energy saving level information of the terminal.

Exemplarily, the time range for performing sensing based on DRX may be determined by the indication information in combination with the energy saving information. Specifically, the indication information may indicate various thresholds and/or correspondences that are for determining the time range based on the energy saving information. The terminal may determine the time range of sensing according to the energy saving information and the threshold and/or correspondence indicated by the indication information.

Optionally, the processing unit is further configured to determine, based on the battery level information of the first terminal and a third threshold, the time range for performing sensing based on DRX.

Optionally, the processing unit further configured to determine, based on the battery level information of the first terminal and the third threshold, the time range for performing sensing based on DRX is specifically configured to perform at least one of:
determining, in a case where the remaining battery level of the first terminal is lower than the third threshold, that sensing is performed within the first time range; or
determining, in a case where the remaining battery level of the first terminal is higher than or equal to the third threshold, that sensing is performed within the second time range.

Optionally, the processing unit is further configured to determine, based on the energy saving level information of the first terminal and a third correspondence, the time range for performing sensing based on DRX. The third correspondence is a correspondence between the energy saving level information of the terminal and the DRX sensing time range.

Optionally, the processing unit configured to perform sensing within the first time range or perform sensing within the second time range is specifically configured to perform at least one of:
performing sensing during a DRX active duration;
performing sensing during a DRX dormant duration; or
performing sensing during the DRX active duration and the DRX dormant duration.

The first terminal 400 in the embodiment of the disclosure may realize the corresponding functions of the first terminal in the embodiment of the method 200. For the process, function, implementation and beneficial effect corresponding to each module (submodule, unit, component, or the like) in the first terminal 400, reference may be made to the corresponding descriptions in the method embodiments, and they will not be elaborated herein. It is to be noted that the function described with respect to each module (submodule, unit, component, or the like) in the first terminal 400 of the embodiment of the disclosure may be realized by different modules (submodules, units, components, or the like), or by the same module (submodule, unit, component or the like).

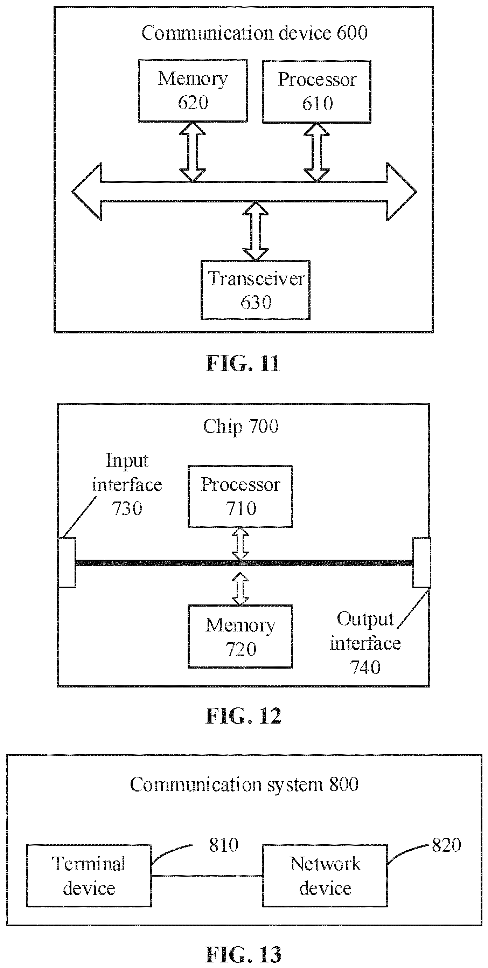

FIG. 11 is a schematic structural diagram of a communication device 600 according to an embodiment of the disclosure. The communication device 600 includes a processor 610. The processor 610 may call and run a computer program from a memory to cause the communication device 600 to implement the method in the embodiments of the disclosure. For example, the processor 610 may be configured to realize the functions of the processing unit 410 of the first terminal in the previous embodiment.

Optionally, the communication device 600 may further include a memory 620. The processor 610 may call, from the memory 620, and run a computer program to cause the communication device 600 to implement the method in the embodiments of the disclosure. The memory 620 may be an independent device independent of the processor 610, or may be integrated into the processor 610.

Optionally, the communication device 600 may further include a transceiver 630. The processor 610 may control the transceiver 630 to communicate with another device, specifically sending information or data to the other device or receiving information or data sent by the other device. The transceiver 630 may include a transmitter and a receiver. The transceiver 630 may further include an antenna. The number of the antennae may be one or more.

Optionally, the communication device 600 may be the network device of the embodiments of the disclosure. The communication device 600 may implement corresponding flows implemented by the network device in each method of the embodiments of the disclosure. For brevity, elaborations are omitted herein.

Optionally, the communication device 600 may be the first terminal of the embodiments of the disclosure. The communication device 600 may implement corresponding flows implemented by the first terminal in each method of the embodiments of the disclosure. For brevity, elaborations are omitted herein.

Optionally, the communication device 600 may be the second terminal of the embodiments of the disclosure. The communication device 600 may implement corresponding flows implemented by the second terminal in each method of the embodiments of the disclosure. For brevity, elaborations are omitted herein.

FIG. 12 is a schematic structural diagram of a chip 700 according to an embodiment of the disclosure. The chip 700 includes a processor 710. The processor 710 may call and run a computer program from a memory to implement the method in the embodiments of the disclosure.

Optionally, the chip 700 may further include a memory 720. The processor 710 may call, from the memory 720, and run the computer program to implement the method executed by a network device in the embodiments of the disclosure.

Optionally, the chip 700 may further include a memory 720. The processor 710 may call, from the memory 720, and run the computer program to implement the method executed by a first terminal in the embodiments of the disclosure.

Optionally, the chip 700 may further include a memory 720. The processor 710 may call, from the memory 720, and run the computer program to implement the method executed by a second terminal in the embodiments of the disclosure.

The memory 720 may be an independent device independent of the processor 710, or may be integrated into the processor 710.

Optionally, the chip 700 may further include an input interface 730. The processor 710 may control the input interface 730 to communicate with another device or chip, specifically acquiring information or data sent by the other device or chip.

Optionally, the chip 700 may further include an output interface 740. The processor 710 may control the output interface 740 to communicate with another device or chip, specifically sending information or data to the other device or chip.

Optionally, the chip may be applied to the first terminal, the second terminal or the network device in the embodiments of the disclosure. The chip may implement corresponding flows implemented by the first terminal, the second terminal or the network device in each method of the embodiments of the disclosure. For brevity, elaborations are omitted herein.

The chips applied to the first terminal, the second terminal or the network device may be the same or different.

It is to be understood that the chip mentioned in the embodiment of the disclosure may also be referred to as a system-level chip, a system chip, a chip system, a system on chip, or the like.

The processor mentioned above may be a general-purpose processor, a Digital Signal Processor (DSP), a Field Programmable Gate Array (FPGA), an Application Specific Integrated Circuit (ASIC), or another programmable logical device, transistor logical device, discrete hardware component, etc. The general-purpose processor mentioned above may be a microprocessor, or any conventional processor, etc.

The memory mentioned above may be a volatile memory or a nonvolatile memory, or may include both volatile and nonvolatile memories. The nonvolatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM).

It is to be understood that the memory is described as an example rather than restriction. For example, the memory in the embodiments of the disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), and a Direct Rambus RAM (DR RAM). That is, the memory in the embodiments of the disclosure is intended to include, but not limited to, memories of these and any other proper types.

FIG. 13 is a schematic block diagram of a communication system 800 according to an embodiment of the disclosure. Optionally, the communication system 800 includes a terminal device 810 and a network device 820.

The terminal device 810 is configured to determine, based on first information, the time range for performing sensing based on DRX.

Optionally, the network device 820 is configured to send the first information to the terminal device 810.

The terminal device 810 may be configured to realize corresponding functions realized by the terminal device in the method. The network device 820 may be configured to realize corresponding functions realized by the network device in the method. For brevity, elaborations are omitted herein.

Optionally, the communication system 800 may further include a second terminal, configured to send the first information to the terminal device 810, namely, the first terminal. The second terminal may be configured to realize corresponding functions realized by the second terminal in the method. For brevity, elaborations are omitted herein.

The embodiments may be implemented completely or partially through software, hardware, firmware or any combination thereof. During implementation with the software, the embodiments may be implemented completely or partially in form of a computer program product. The computer program product includes one or more computer instructions. When the computer program instruction is loaded and executed on a computer, the flows or functions described according to the embodiments of the disclosure are completely or partially generated. The computer may be a universal computer, a special-purpose computer, a computer network, or another programmable device. The computer instruction may be stored in a computer-readable storage medium or transmitted from a computer-readable storage medium to another computer-readable storage medium. For example, the computer instruction may be transmitted from a website, computer, server, or data center to another website, computer, server, or data center in a wired (such as coaxial cable, optical fiber, and Digital Subscriber Line (DSL)) or wireless (such as infrared, radio, and microwave) manner. The computer readable storage medium may be any available medium accessible for the computer or a data storage device integrated with one or more available media, such as a server and a data center. The available medium may be a magnetic medium (for example, a floppy disk, a hard disk and a magnetic tape), an optical medium (for example, a Digital Video Disk (DVD)), a semiconductor medium (for example, a Solid State Disk (SSD)), or the like.

It is to be understood that, in each embodiment of the disclosure, the magnitude of the sequence number of each process does not mean an execution sequence, and the execution sequence of each process should be determined by its function and an internal logic and should not form any limitation on the implementation of the embodiments of the disclosure.

Those skilled in the art may clearly know that specific working processes of the system, device and unit described above may refer to the corresponding processes in the method embodiment and will not be elaborated herein for ease and brevity of description.

The above is only the specific implementation of the disclosure and not intended to limit the scope of protection of the disclosure. Any variations or replacements apparent to those skilled in the art within the technical scope disclosed in the disclosure shall fall within the scope of protection of the disclosure. Therefore, the scope of protection of the disclosure shall be subjected to the scope of protection of the claims.

## Claims

1. A Discontinuous Reception, DRX, based sensing method, comprising:
determining (S210), by a first terminal based on first information, a time range for performing partial sensing based on DRX, the time range being at least one of a DRX dormant duration or a DRX active duration for performing partial sensing based on DRX,
wherein the first information comprises indication information, the indication information is configured to indicate whether partial sensing is allowed to be performed during the DRX dormant duration.

2. The method of claim 1, wherein the indication information is pre-configuration information or network configuration information.

3. The method of claim 2, wherein the network configuration information is at least one of System Information Block, SIB, information, Radio Resource Control, RRC, signaling, or Downlink Control Information, DCI, signaling.

4. The method of any one of claims 1 to 3, wherein the first information comprises a first parameter.

5. A first terminal (400), comprising:
a processing unit (410), configured to determine, based on first information, a time range for performing partial sensing based on Discontinuous Reception, DRX, the time range being at least one of a DRX dormant duration or a DRX active duration for performing partial sensing based on DRX,
wherein the first information comprises indication information, the indication information is configured to indicate whether partial sensing is allowed to be performed during the DRX dormant duration.

6. The first terminal (400) of claim 5, wherein the indication information is pre-configuration information or network configuration information.

7. The first terminal (400) of claim 6, wherein the network configuration information is at least one of System Information Block, SIB, information, Radio Resource Control, RRC, signaling, or Downlink Control Information, DCI, signaling.

8. The first terminal (400) of any one of claims 5 to 7, wherein the first information comprises energy saving information.

9. A computer-readable storage medium, configured to store a computer program, wherein the computer program, when executed by a device, causes the device to perform the method of any one of claims 1 to 4.

## Patentansprüche

1. Erfassungsverfahren basierend auf diskontinuierlichem Empfang, DRX, umfassend:
Bestimmen (S210), durch ein erstes Endgerät basierend auf ersten Informationen, eines Zeitbereichs zum Durchführen einer partiellen Erfassung basierend auf DRX, wobei der Zeitbereich eine DRX-Ruhedauer und/oder eine DRX-Aktivdauer zum Durchführen einer partiellen Erfassung basierend auf DRX ist,
wobei die ersten Informationen Indikationsinformationen umfassen,
wobei die Indikationsinformationen dazu ausgelegt sind, anzugeben, ob eine partielle Erfassung während der DRX-Ruhedauer durchgeführt werden darf.

2. Verfahren nach Anspruch 1, wobei die Indikationsinformationen Vorkonfigurationsinformationen oder Netzwerkkonfigurationsinformationen sind.

3. Verfahren nach Anspruch 2, wobei die Netzwerkkonfigurationsinformationen mindestens eines von Systeminformationsblock- bzw. SIB-Informationen, einer Funkressourcensteuerung- bzw. RRC-Signalisierung oder einer Downlink-Steuerinformationen- bzw. DCI-Signalisierung sind.

4. Verfahren nach einem der Ansprüche 1 bis 3, wobei die ersten Informationen einen ersten Parameter umfassen.

5. Erstes Endgerät (400), umfassend:
eine Verarbeitungseinheit (410), die ausgelegt ist zum Bestimmen, basierend auf ersten Informationen, eines Zeitbereichs zum Durchführen einer partiellen Erfassung basierend auf diskontinuierlichem Empfang, DRX, wobei der Zeitbereich eine DRX-Ruhedauer und/oder eine DRX-Aktivdauer zum Durchführen einer partiellen Erfassung basierend auf DRX ist,
wobei die ersten Informationen Indikationsinformationen umfassen,
wobei die Indikationsinformationen dazu ausgelegt sind, anzugeben, ob eine partielle Erfassung während der DRX-Ruhedauer durchgeführt werden darf.

6. Erstes Endgerät (400) nach Anspruch 5, wobei die Indikationsinformationen Vorkonfigurationsinformationen oder Netzwerkkonfigurationsinformationen sind.

7. Erstes Endgerät (400) nach Anspruch 6, wobei die Netzwerkkonfigurationsinformationen mindestens eines von Systeminformationsblock- bzw. SIB-Informationen, einer Funkressourcensteuerung- bzw. RRC-Signalisierung oder einer Downlink-Steuerinformationen- bzw. DCI-Signalisierung sind.

8. Erstes Endgerät (400) nach einem der Ansprüche 5 bis 7, wobei die ersten Informationen Energiesparinformationen umfassen.

9. Computerlesbares Speichermedium, das dazu ausgelegt ist, ein Computerprogramm zu speichern, wobei das Computerprogramm bei Ausführung durch eine Vorrichtung bewirkt, dass die Vorrichtung das Verfahren nach einem der Ansprüche 1 bis 4 durchführt.

## Revendications

1. Procédé de détection sur la base d'une réception discontinue, DRX, comprenant :
la détermination (S210), par un premier terminal sur la base de premières informations, d'une plage temporelle pour réaliser une détection partielle sur la base d'une DRX, la plage temporelle étant au moins une durée parmi une durée dormante de DRX ou une durée active de DRX afin de réaliser une détection partielle sur la base d'une DRX,
dans lequel les premières informations comprennent des informations d'indication,
les informations d'indication sont configurées pour indiquer si la réalisation d'une détection partielle est autorisée pendant la durée dormante de DRX.

2. Procédé selon la revendication 1, dans lequel les informations d'indication sont des informations de pré-configuration ou des informations de configuration de réseau.

3. Procédé selon la revendication 2, dans lequel les informations de configuration de réseau sont au moins un élément parmi des informations de blocs d'informations système, SIB, une signalisation de commande de ressources radio, RRC, ou une signalisation d'informations de commande de liaison descendante, DCI.

4. Procédé selon l'une quelconque des revendications 1 à 3, dans lequel les premières informations comprennent un premier paramètre.

5. Premier terminal (400), comprenant :
une unité de traitement (410), configurée pour déterminer, sur la base de premières informations, une plage temporelle pour réaliser une détection partielle sur la base d'une réception discontinue, DRX, la plage temporelle étant au moins une durée parmi une durée dormante de DRX ou une durée active de DRX afin de réaliser une détection partielle sur la base d'une DRX,
dans lequel les premières informations comprennent des informations d'indication,
les informations d'indication sont configurées pour indiquer si la réalisation d'une détection partielle est autorisée pendant la durée dormante de DRX.

6. Premier terminal (400) selon la revendication 5, dans lequel les informations d'indication sont des informations de pré-configuration ou des informations de configuration de réseau.

7. Premier terminal (400) selon la revendication 6, dans lequel les informations de configuration de réseau sont au moins un élément parmi des informations de blocs d'informations système, SIB, une signalisation de commande de ressources radio, RRC, ou une signalisation d'informations de commande de liaison descendante, DCI.

8. Premier terminal (400) selon l'une quelconque des revendications 5 à 7, dans lequel les premières informations comprennent des informations d'économie d'énergie.

9. Support de stockage lisible par ordinateur, configuré pour stocker un programme informatique, le programme informatique, lorsqu'il est exécuté par un dispositif, amenant le dispositif à réaliser le procédé selon l'une quelconque des revendications 1 à 4.
